# EUROPÄISCHE PATENTSCHRIFT

(11) **EP 3 115 567 B1**
(45) Veröffentlichungstag und Bekanntmachung des Hinweises auf die Patenterteilung: **11.07.2018**
(21) Anmeldenummer: 16001010.4
(22) Anmeldetag: 04.05.2016
(51) Int. Cl.: F01N 3/20, F01N 3/28, F01N 13/00

(54) **ABGASNACHBEHANDLUNGSEINRICHTUNG ZUR NACHBEHANDLUNG VON ABGAS EINER BRENNKRAFTMASCHINE**
EXHAUST GAS AFTER-TREATMENT DEVICE FOR AFTER-TREATMENT OF EXHAUST GAS OF A COMBUSTION ENGINE
DISPOSITIF DE POST-TRAITEMENT DE GAZ D'ECHAPPEMENT D'UN MOTEUR A COMBUSTION INTERNE

(30) Priorität: 06.07.2015 DE 102015008718
(43) Veröffentlichungstag der Anmeldung: 11.01.2017
(73) Patentinhaber: AUDI AG, 85045 Ingolstadt (DE)
(72) Erfinder: Lörch, Henning, DE - 74172 Neckarsulm (DE); Keicher, Wolfgang, DE - 74235 Erlenbach (DE)

(56) Entgegenhaltungen:
- DE-A1-102010 014 037
- DE-U1-202012 011 764

## Beschreibung

Die Erfindung betrifft eine Abgasnachbehandlungseinrichtung zur Nachbehandlung von Abgas einer Brennkraftmaschine, mit einem SCR-Katalysator zur selektiven katalytischen Reduktion, eine Reduktionsmitteleinbringvorrichtung zur Einbringung von Reduktionsmittel an einer stromaufwärts des SCR-Katalysators vorliegenden Einbringstelle sowie einer strömungstechnisch zwischen der Einbringstelle und dem SCR-Katalysator angeordneten Mischvorrichtung.

Die Abgasnachbehandlungseinrichtung dient dem Nachbehandeln des von der Brennkraftmaschine erzeugten Abgases. Die Abgasnachbehandlungseinrichtung kann insoweit auch als Abgasreinigungseinrichtung bezeichnet werden. Das von der Brennkraftmaschine erzeugte Abgas wird der Abgasnachbehandlungseinrichtung zugeführt und durchströmt diese. Stromabwärts der Abgasnachbehandlungseinrichtung wird das Abgas beispielsweise einer Außenumgebung zugeführt.

Die Abgasnachbehandlungseinrichtung weist den SCR-Katalysator auf, mittels welcher eine selektive katalytische Reduktion von in dem Abgas enthaltenen Schadstoffen vorgenommen werden kann. Während der selektiven katalytischen Reduktion werden vorzugsweise Stickoxide, also beispielsweise Stickstoffoxid (NO) sowie Stickstoffdioxid (NO₂) reduziert. Zur Durchführung der selektiven katalytischen Reduktion wird das Reduktionsmittel benötigt. Als Reduktionsmittel kann beispielsweise Ammoniak (NH₃) verwendet werden. Weil das Ammoniak jedoch schwierig zu handhaben ist, wird es üblicherweise erst in der Abgasnachbehandlungseinrichtung erzeugt, insbesondere durch Thermolyse.

Zu diesem Zweck wird das Reduktionsmittel zunächst in Form einer Harnstofflösung in das Abgas eingebracht. Zur Einbringung des Reduktionsmittels in das Abgas ist die Reduktionsmitteleinbringvorrichtung vorgesehen. Dieses bringt das Reduktionsmittel an der Einbringstelle in das Abgas ein, wobei diese strömungstechnisch stromaufwärts des SCR-Katalysators angeordnet ist. Das Reduktionsmittel vermengt sich ausgehend von der Einbringstelle in stromabwärtiger Richtung mit dem Abgas und strömt gemeinsam mit diesem in Richtung des SCR-Katalysators und nachfolgend durch diesen hindurch. Je besser die Vermischung beziehungsweise Vermengung des Reduktionsmittels mit dem Abgas vor dem Einströmen in den SCR-Katalysator ist, umso effizienter arbeitet dieser. Aus diesem Grund ist strömungstechnisch zwischen der Einbringstelle und dem SCR-Katalysator die Mischvorrichtung angeordnet. Diese sorgt für eine intensivere Durchmischung des Reduktionsmittels mit dem Abgas.

Aus dem Stand der Technik ist beispielsweise die Druckschrift DE 20 2012 011 764 U1 bekannt. Diese betrifft einen Mischer für eine Vorrichtung zur selektiven katalytischen Reduktion von Abgasen von Brennkraftmaschinen, zur gleichmäßigen Verteilung eines in den Abgasstrom eingebrachten Reduktionsmittels im Abgasstrom am Katalysatoreintritt, wobei der Mischer eine vom Gemisch aus Abgas und Reduktionsmittel zu durchströmende Struktur von Mischerelementen umfasst. Dabei ist vorgesehen, dass die Mischerelemente zur direkten elektrischen Beheizung mit einem sie durchfließenden elektrischen Strom aufgrund ihres elektrischen Widerstands eingerichtet sind.

Weiterhin beschreibt die Druckschrift DE 10 2010 014 037 A1 ein Reduktionsmittelzersetzungssystem, das gemäß einem Ausführungsbeispiel eine Abgaskammer enthält, die einen Einlass und einen Auslass aufweist. Des Weiteren enthält das System eine erste Abgasverteilkomponente, die in der Kammer positioniert ist und mit dem Auslass in Abgasempfangsverbindung gebracht werden kann. Die erste Abgasverteilkomponente bewirkt Wirbelabgasströmungsprofile in der Abgaskammer. Darüber hinaus enthält das System eine zweite Abgasverteilkomponente, die in der Kammer positioniert ist und mit dem Einlass in Abgaszuführverbindung gebracht werden kann. Eine zweite Abgasverteilkomponente enthält Merkmale, die ein Wirbelabgasströmungsprofil in einem durch die zweite Abgasverteilkomponente definierten Raum bewirken. Des Weiteren enthält das System einen Reduktionsmittelinjektor, der mit der Abgaskammer gekoppelt ist. Der Reduktionsmittelinjektor kann mit dem Abgas in der Kammer in Reduktionsmitteleinspritzverbindung gebracht werden.

Es ist Aufgabe der Erfindung, eine Abgasnachbehandlungseinrichtung vorzuschlagen, welche gegenüber bekannten Abgasnachbehandlungseinrichtungen Vorteile aufweist, insbesondere eine bessere Aufbereitung des Reduktionsmittels ermöglicht.

Die wird erfindungsgemäß mit einer Abgasnachbehandlungseinrichtung mit den Merkmalen des Anspruchs 1 erreicht. Dabei ist vorgesehen, dass die Mischvorrichtung ein Mischelement sowie ein Katalysatorelement aufweist, wobei das Katalysatorelement in Strömungsrichtung des Abgases gesehen eine kleinere Querschnittsfläche aufweist als das Mischelement, und dass das Katalysatorelement unmittelbar an dem Mischelement befestigt ist, wobei Mischflügel des Mischelements auf ihrer in radialer Richtung innenliegenden Seite unmittelbar an dem Katalysatorelement befestigt sind oder auf der radial innenliegenden Seite der Mischflügel eine Aufnahme für das Katalysatorelement ausgebildet ist, in welcher das Katalysatorelement angeordnet und befestigt ist. Die Mischeinrichtung ist insoweit nicht lediglich zum Vermischen des Reduktionsmittels mit dem Abgas vorgesehen, sondern führt zusätzlich bereits eine Nachbehandlung des Abgases mittels des Katalysatorelements durch.

Das Katalysatorelement dient insbesondere der Aufbereitung des Reduktionsmittels in eine für den SCR-Katalysator verwertbare Form. Zusätzlich oder alternativ kann in dem Katalysatorelement jedoch bereits die selektive katalytische Reduktion zumindest teilweise ablaufen. Das Aufbereiten des Reduktionsmittels ist insbesondere vorgesehen, falls es in Form der vorstehend beschriebenen Harnstofflösung eingebracht wird, aus welcher nachfolgend durch Thermolyse das eigentliche Reduktionsmittel, nämlich beispielsweise Ammoniak, entsteht. Insbesondere wird bereits stromaufwärts des SCR-Katalysators eine vollständige Umwandlung der Harnstofflösung in Ammoniak realisiert. Das bedeutet, dass der SCR-Katalysator vermehrt mit dem eigentlichen Reduktionsmittel Ammoniak und nicht mit der Harnstofflösung und/oder Zwischenprodukten, beispielsweise Isocyansäure (HNCO), beaufschlagt wird.

Weil jedoch das Katalysatorelement allein keine ausreichende Durchmischung des Reduktionsmittels mit dem Abgas bewirkt, weist die Mischvorrichtung sowohl das Katalysatorelement als auch das Mischelement auf. Das Mischelement und das Katalysatorelement sind beispielsweise in Strömungsrichtung hintereinander angeordnet. Alternativ können sie in Strömungsrichtung des Abgases gesehen auch überlappend angeordnet sein, also in Strömungsrichtung wenigstens bereichsweise an derselben Position angeordnet sein.

Es ist vorgesehen, dass das Katalysatorelement in Strömungsrichtung gesehen eine kleinere Querschnittsfläche aufweist als das Mischelement. Das bedeutet insbesondere, dass das Katalysatorelement eine Querschnittsfläche aufweist, welche kleiner ist als eine Durchströmungsfläche einer Abgasleitung, in welcher das Katalysatorelement angeordnet ist. Das die Abgasleitung durchströmende Abgas kann insoweit an dem Katalysatorelement vorbeiströmen. Zusätzlich oder alternativ weist das Mischelement eine Querschnittsfläche auf, welche dem Durchströmungsquerschnitt der Abgasleitung entspricht oder allenfalls geringfügig kleiner ist. Das Mischelement liegt insoweit an einer Wandung der Abgasleitung an, insbesondere in Umfangsrichtung bezüglich der Strömungsrichtung durchgehend oder zumindest abschnittsweise.

Unmittelbar nach dem Einbringen des Reduktionsmittels in das Abgas liegt dieses vorzugsweise in flüssiger Form, insbesondere ausschließlich in flüssiger Form, vor. Wird eine Harnstofflösung verwendet, so kann diese beispielsweise durch die Summenformel (NH₂)₂CO · 7 H₂O beschrieben werden. Nach dem Einbringen verdampft das Reduktionsmittel. Dies kann durch die Reaktionsgleichung (NH₂)₂CO · 7 H₂O ⇒ (NH₂)₂CO + 7 H₂O beschrieben werden. Bei ausreichend hohen Temperaturen läuft eine Thermolyse ab, welche durch die Reaktionsgleichung (NH₂)₂CO ⇒ HNCO + NH₃ zum Ausdruck kommt. Es entsteht insoweit bereits ein Teil des Ammoniaks (NH₃) sowie Isocyansäure (HNCO). Die Isocyansäure reagiert bei ausreichend hoher Temperatur mit Wasser beziehungsweise Wasserdampf. Dieser Vorgang wird als Hydrolyse bezeichnet und kann durch die Reaktionsgleichung HNCO + H₂O ⇒ HN₃ + CO₂ ausgedrückt werden. Die eigentliche selektive katalytische Reduktion unter Verwendung des erzeugten Ammoniaks wird durch die Reaktionsgleichung NO₂ + NO + 2 NH₃ ⇒ 2 N₂ + 3 H₂O beschrieben werden.

Aufgrund des zusätzlichen Katalysatorelements, welches der Mischvorrichtung zugeordnet ist, können sowohl die Hydrolyse als auch die selektive katalytische Reduktion teilweise von dem SCR-Katalysator auf das Katalysatorelement vorgelagert werden, sodass der SCR-Katalysator entlastet wird. Mit Hilfe der hier vorgestellten Mischvorrichtung kann entsprechend sowohl eine effiziente Umwandlung des Reduktionsmittels mit Hilfe des Katalysatorelements erfolgen, als auch gleichzeitig eine effektive Vermischung des Reduktionsmittels mit dem Abgas, wozu das Mischelement dient. Das Mischelement sowie das Katalysatorelement bilden dabei eine einzige Baueinheit, vorzugsweise gemeinsam mit der Abgasleitung, in welcher sie angeordnet sind. Alternativ ist die aus Mischelement und Katalysatorelement bestehende Baueinheit zum Einsetzen in eine bestehende Abgasleitung ausgebildet.

Es ist vorgesehen, dass das Katalysatorelement unmittelbar an dem Mischelement befestigt ist. Beispielsweise ist das Katalysatorelement ausschließlich an dem Mischelement befestigt und über dieses bezüglich der Abgasleitung gehalten. Das Mischelement weist eine Vielzahl von Mischflügeln auf. Diese können auf ihrer bezüglich der Strömungsrichtung radial außenliegenden Seite mit einem Haltesteg verbunden sein, welcher an einer Innenumfangsfläche der Abgasleitung anliegt und vorzugsweise dort befestigt ist. Auf ihrer in radialer Richtung innenliegenden Seite sind die Mischflügel unmittelbar an dem Katalysatorelement befestigt, um dieses festzusetzen. Alternativ ist auf der radial innenliegenden Seite der Mischflügel eine Aufnahme für das Katalysatorelement ausgebildet, in welcher dieses angeordnet und befestigt ist.

In einer weiteren Ausgestaltung der Erfindung ist vorgesehen, dass das Katalysatorelement stromaufwärts oder stromabwärts des Mischelements angeordnet ist. Grundsätzlich kann eine beliebige Anordnung des Katalysatorelements bezüglich des Mischelements vorgesehen sein. Grundsätzlich kann es insoweit stromabwärts des Mischelements vorliegen. Bevorzugt ist jedoch eine stromaufwärtige Anordnung des Katalysatorelements bezüglich des Mischelements. Somit kann das mittels der Reduktionsmitteleinbringvorrichtung eingebrachte Reduktionsmittel zunächst auf das Katalysatorelement treffen und in diesem umgewandelt werden. Stromabwärts des Katalysatorelements werden anschließend bevorzugt das Abgas und/oder das Reduktionsmittel von dem Mischelement mit einem Drall bezüglich einer Hauptströmungsrichtung des Abgases beaufschlagt, sodass es zur einer effizienten Vermischung kommt.

In einer weiteren bevorzugten Ausgestaltung der Erfindung ist vorgesehen, dass das Mischelement das Katalysatorelement zumindest bereichsweise umgreift und/oder in radialer Richtung bezogen auf die Strömungsrichtung über das Katalysatorelement übersteht. Das Mischelement weist insoweit - bezüglich der Strömungsrichtung - über seinen Umfang hinweg wenigstens bereichsweise eine größere Erstreckung in radialer Richtung auf als das Katalysatorelement. Insbesondere umgreift es das Katalysatorelement in Umfangsrichtung wenigstens bereichsweise, insbesondere vollständig. Dabei kann eine Befestigung des Katalysatorelements mit Hilfe des Mischelements auf die vorstehend beschriebene Art und Weise realisiert sein.

In einer Weiterbildung der Erfindung ist vorgesehen, dass das Mischelement eine zentrale Aufnahme für das Katalysatorelement aufweist. Die zentrale Aufnahme liegt dabei beispielsweise in einer Halterung für das Katalysatorelement vor. Das Katalysatorelement wird bei einer Montage der Mischvorrichtung in die zentrale Aufnahme eingesetzt und anschließend an dem Mischelement befestigt. Diese Befestigung kann grundsätzlich auf beliebige Art und Weise ausgestaltet sein. Beispielsweise ist das Katalysatorelement formschlüssig und/oder stoffschlüssig an dem Mischelement beziehungsweise der an diesem vorliegenden Halterung befestigt. Die Aufnahme liegt vorzugsweise bezüglich der Strömungsrichtung des Abgases zentral in dem Mischelement vor.

Eine weitere bevorzugte Ausgestaltung der Erfindung sieht vor, dass das Mischelement Mischflügel aufweist. Hierauf wurde vorstehend bereits hingewiesen. Die Mischflügel erstrecken sich bezüglich der Strömungsrichtung des Abgases gesehen in radialer Richtung nach außen, insbesondere ausgehend von dem Katalysatorelement. Beispielsweise erstrecken sich die Mischflügel in radialer Richtung bis hin zu einer Innenumfangsfläche der Abgasleitung, in welcher das Mischelement angeordnet ist. Die Mischflügel sind vorzugsweise profiliert, sind also mit einem strömungstechnischen Profil versehen. Sie sind derart angeordnet, dass das sie durchströmende Abgas und/oder Reduktionsmittel von ihnen mit Drall beaufschlagt wird, also in eine Rotationsbewegung in Umfangsrichtung bezüglich der Strömungsrichtung beziehungsweise Hauptströmungsrichtung des Abgases versetzt wird.

Eine weitere bevorzugte Ausführungsform der Erfindung sieht vor, dass das Katalysatorelement einen runden Querschnitt und/oder das Mischelement einen unrunden, insbesondere ovalen, Querschnitt aufweist. Vorzugsweise ist das Mischelement beziehungsweise dessen Außenumfangsform an einen Innenumfang beziehungsweise eine Innenumfangsform der Abgasleitung, in welcher es angeordnet ist, formangepasst. Im Querschnitt gesehen füllt vorzugsweise das Mischelement die Abgasleitung vollständig aus. Dabei kann die Abgasleitung beispielsweise unrund sein, sodass entsprechend auch das Mischelement einen unrunden Querschnitt beziehungsweise eine unrunde Außenumfangsform aufweist.

Bevorzugt ist der Querschnitt des Mischelements oval. Das Katalysatorelement ist dagegen bevorzugt im Querschnitt rund. Es weist dabei einen Durchmesser auf, welcher höchstens so groß ist wie die kleinsten Abmessungen des Mischelements in radialer Richtung über dessen Umfang hinweg. Besonders bevorzugt ist der Durchmesser des Katalysatorelements jedoch kleiner. Das Abgas und/oder das Reduktionsmittel können insoweit über den gesamten Umfang des Katalysatorelements hinweg um dieses herum und dabei durch das Mischelement hindurch strömen. Mit einer derartigen Ausgestaltung der Mischvorrichtung wird ihr Druckverlust begrenzt. Dennoch können trotz des kleinen Querschnitts des Katalysatorelements die beschriebenen vorteilhaften Effekte realisiert werden.

Eine bevorzugte Weiterbildung der Erfindung sieht vor, dass das Katalysatorelement ein SCR-Katalysatorelement ist. In dem Katalysatorelement laufen insoweit dieselben Reaktionen ab wie in dem SCR-Katalysator, insbesondere ein Teil der Hydrolyse und/oder der selektiven katalytischen Reduktion.

Eine weitere bevorzugte Ausgestaltung der Erfindung sieht vor, dass die Reduktionsmitteleinbringvorrichtung auf das Katalysatorelement ausgerichtet ist. Das bedeutet, dass die Reduktionsmitteleinbringvorrichtung derart angeordnet ist, dass sie das Reduktionsmittel in Richtung des Katalysatorelements ausbringt. Besonders bevorzugt ist die Reduktionsmitteleinbringvorrichtung zentral auf das Katalysatorelement ausgerichtet, bringt das Reduktionsmittel also derart in das Abgas ein, dass es zentral auf das Katalysatorelement trifft.

Schließlich kann in einer weiteren Ausgestaltung der Erfindung vorgesehen sein, dass ein Sprühkegel der Reduktionsmitteleinbringvorrichtung bei wenigstens einem Abgasmassenstrom von dem Katalysatorelement eingefasst ist. Die Reduktionsmitteleinbringvorrichtung sprüht das Reduktionsmittel in das Abgas ein, wobei dieses in Form des Sprühkegels vorliegt. Die Reduktionsmitteleinbringvorrichtung ist nun derart angeordnet beziehungsweise ausgerichtet, dass der Sprühkegel bei dem wenigstens einen Abgasmassenstrom vollständig auf das Katalysatorelement trifft. Das mit Hilfe der Reduktionsmitteleinbringvorrichtung eingebrachte Reduktionsmittel soll insoweit bevorzugt nicht an dem Katalysatorelement vorbeiströmen, sondern vielmehr dieses vollständig oder zumindest nahezu vollständig durchlaufen. Besonders bevorzugt ist die Reduktionsmitteleinbringvorrichtung derart angeordnet, dass der Sprühkegel bei allen während einem Normalbetrieb der Abgasreinigungseinrichtung auftretenden Abgasmassenströmen vollständig auf das Katalysatorelement trifft beziehungsweise von diesem eingefasst ist.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Abgasnachbehandlungseinrichtung, welche einen SCR-Katalysator, eine Reduktionsmitteleinbringvorrichtung sowie eine Mischvorrichtung aufweist, und
- Figur 2: eine Detailansicht der Mischvorrichtung.

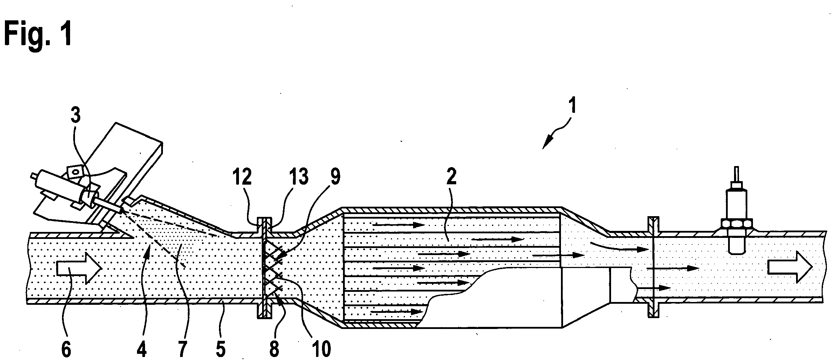

Die Figur 1 zeigt eine schematische Darstellung einer Abgasnachbehandlungseinrichtung 1. Diese dient beispielsweise zur Nachbehandlung beziehungsweise Reinigung von Abgas einer hier nicht dargestellten Brennkraftmaschine. Die Abgasnachbehandlungseinrichtung 1 verfügt über einen SCR-Katalysator 2 sowie eine Reduktionsmitteleinbringvorrichtung 3. Mit Hilfe der Reduktionsmitteleinbringvorrichtung 3 kann Reduktionsmittel an einer Einbringstelle 4 in eine Abgasleitung 5 beziehungsweise das die Abgasleitung 5 durchströmende Abgas eingebracht werden. Die Strömungsrichtung des Abgases in der Abgasleitung 5 ist durch den Pfeil 6 angedeutet.

Es ist erkennbar, dass das Reduktionsmittel in Form eines Sprühkegels 7 eingebracht wird, welcher sich in Strömungsrichtung des Abgases aufweitet. Strömungstechnisch zwischen der Einbringstelle 4 und dem SCR-Katalysator 2 ist eine Mischvorrichtung 8 angeordnet. Diese weist vorzugsweise ein Mischelement 9 mit mehreren Mischflügeln 10 sowie ein hier nicht erkennbares Katalysatorelement 11 auf. Beispielsweise ist das Mischelement 9 zwischen Anschlussflanschen 12 und 13 gehalten, wobei der Anschlussflansch 12 der Abgasleitung 5 zugeordnet ist, während der Anschlussflansch 13 Bestandteil des SCR-Katalysators 2 ist. Die Mischvorrichtung 8 dient zur Vermischung des mit Hilfe der Reduktionsmitteleinbringvorrichtung eingebrachten Reduktionsmittels mit dem die Abgasleitung 5 durchströmenden Abgas. Je besser das Reduktionsmittel mit dem Abgas vermischt ist, umso effizienter kann die selektive katalytische Reduktion in dem SCR-Katalysator 2 ablaufen.

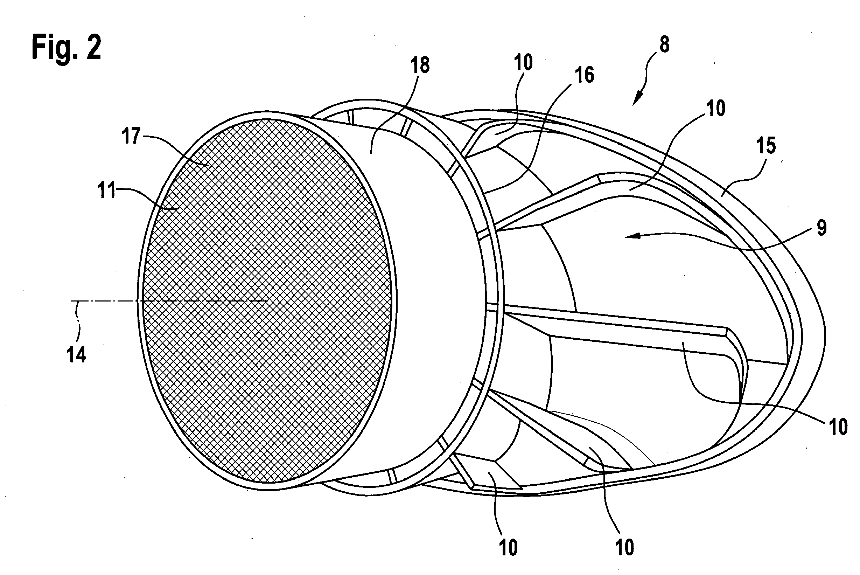

Die Figur 2 zeigt eine Detailansicht der Mischvorrichtung 8. Angedeutet ist eine Längsmittelachse 14 der Mischvorrichtung 8. Es ist erkennbar, dass die Mischflügel 10 sich in radialer Richtung bezüglich der Längsmittelachse 14 nach außen erstrecken und dabei ein strömungstechnisches Profil aufweisen, also nach Art einer Tragfläche ausgebildet sind. Zudem sind die Mischflügel 10 um ihre jeweilige Längsmittelachse gekrümmt, sodass das sie überströmende Abgas und/oder Reduktionsmittel mit Drall um die Längsmittelachse 14 herum beaufschlagt wird. Auf ihrer in radialer Richtung außenliegenden Seite sind die Mischflügel 10 an einem umlaufenden Befestigungsring 15 befestigt. Dieser ist an eine Innenquerschnittsform der Abgasleitung 15 formangepasst.

Mit Hilfe des Befestigungsrings 15 wird die Mischvorrichtung 8 befestigt, insbesondere an den Anschlussflanschen 12 und 13. Dabei soll das Mischelement 9 in Strömungsrichtung stromabwärts liegen, sodass das hier erkennbare Katalysatorelement 11 in die Abgasleitung 5 hineinragt. Auch eine umgekehrte Anordnung ist jedoch möglich. Die Mischflügel 10 sind sowohl an dem Befestigungsring 15 als auch an einem Verstärkungsring 16 befestigt. Vorzugsweise erstrecken sich die Mischflügel 10 in radialer Richtung ausgehend von dem Verstärkungsring 16 hin zu dem Befestigungsring 15 und zu dem zusätzlich ausgehend von dem Verstärkungsring 16 in radialer Richtung nach innen in Richtung des Katalysatorelements 11.

Während der Befestigungsring 15 vorzugsweise eine im Querschnitt bezüglich der Längsmittelachse 14 ovale Form aufweist, ist der Verstärkungsring 16 rund. Er weist dabei einen Durchmesser auf, welcher den kleinsten Abmessungen des Befestigungsrings 15 in radialer Richtung entspricht. Es ist erkennbar, dass das Katalysatorelement 11 in einer zentralen Aufnahme 17 angeordnet ist, welche beispielsweise in einer Halterung 18 für das Katalysatorelement 11 vorliegt. Die Halterung 18 ist beispielsweise zylinderförmig, insbesondere kreiszylinderförmig. Sie liegt beispielsweise an den Mischflügeln 10 in axialer Richtung an und/oder ist an den Mischflügeln 10 befestigt.

Es kann vorgesehen sein, dass sich die Mischflügel in radialer Richtung lediglich bis hin zu der Halterung 18 erstrecken, sodass der unmittelbar in Strömungsrichtung hinter dem Katalysatorelement 11 gelegene Bereich nicht von ihnen durchsetzt ist. Besonders bevorzugt erstrecken sie sich jedoch bis hin zu der Längsmittelachse 14 und sind dort aneinander befestigt. Mit einer derartigen Ausgestaltung kann das Abgas zusammen mit dem Reduktionsmittel zunächst das Katalysatorelement 11 durchströmen und anschließend das Mischelement 9 beziehungsweise dessen Mischflügel 10 passieren, sodass das Abgas und/oder das Reduktionsmittel mit Drall beaufschlagt werden.

Vorzugsweise ist die Reduktionsmitteleinbringvorrichtung 3 derart ausgerichtet, dass der vorstehend beschriebene Sprühkegel 7 vollständig auf das Katalysatorelement 11 auftrifft, zumindest bei wenigstens einem bestimmten Abgasmassenstrom, vorzugsweise jedoch bei allen während eines Normalbetriebs der Abgasnachbehandlungseinrichtung 1 auftretenden Massenströmen. Insoweit wird der in radialer Richtung außerhalb des Verstärkungsrings 16 liegende Bereich der Mischflügel 10 im Wesentlichen lediglich von Abgas durchströmt, während durch das Katalysatorelement 11 ein Gemisch von Abgas und Reduktionsmittel strömt.

In dem Katalysatorelement 11, welches als SCR-Katalysatorelement 11 ausgebildet ist, kann insoweit bereits ein Teil der Reaktionen ablaufen, welche ansonsten erst in dem SCR-Katalysator 2 stattfinden würden. Somit kann dessen Effizienz deutlich verbessert werden, insbesondere weil eine Aufbereitung des eingebrachten Reduktionsmittels zumindest teilweise, bevorzugt bereits vollständig, erfolgt ist, bevor es den SCR-Katalysator 2 zusammen mit dem Abgas erreicht.

## Patentansprüche

1. Abgasnachbehandlungseinrichtung (1) zur Nachbehandlung von Abgas einer Brennkraftmaschine, mit einem SCR-Katalysator (2) zur selektiven katalytischen Reduktion, einer Reduktionsmitteleinbringvorrichtung (3) zur Einbringung von Reduktionsmittel an einer stromaufwärts des SCR-Katalysators vorliegenden Einbringstelle (4) sowie einer strömungstechnisch zwischen der Einbringstelle (4) und dem SCR-Katalysator (2) angeordneten Mischvorrichtung (8), **dadurch gekennzeichnet, dass** die Mischvorrichtung (8) ein Mischelement (9) sowie ein Katalysatorelement (11) aufweist, wobei das Katalysatorelement (11) in Strömungsrichtung des Abgases gesehen eine kleinere Querschnittsfläche aufweist als das Mischelement (9), und dass das Katalysatorelement (11) unmittelbar an dem Mischelement (9) befestigt ist, wobei Mischflügel (10) des Mischelements (9) auf ihrer in radialer Richtung innenliegenden Seite unmittelbar an dem Katalysatorelement (11) befestigt sind oder auf der radial innenliegenden Seite der Mischflügel (10) eine Aufnahme (17) für das Katalysatorelement (11) ausgebildet ist, in welcher das Katalysatorelement (11) angeordnet und befestigt ist.

2. Abgasnachbehandlungseinrichtung nach Anspruch 1, **dadurch gekennzeichnet, dass** das Katalysatorelement (11) stromaufwärts oder stromabwärts des Mischelements (9) angeordnet ist.

3. Abgasnachbehandlungseinrichtung nach einem der vorhergehenden Ansprüche, **dadurch gekennzeichnet, dass** das Mischelement (9) das Katalysatorelement (11) zumindest bereichsweise umgreift und/oder in radialer Richtung bezogen auf die Strömungsrichtung über das Katalysatorelement (11) übersteht.

4. Abgasnachbehandlungseinrichtung nach einem der vorhergehenden Ansprüche, **dadurch gekennzeichnet, dass** die Aufnahme (17) als zentrale Aufnahme (17) vorliegt.

5. Abgasnachbehandlungseinrichtung nach einem der vorhergehenden Ansprüche, **dadurch gekennzeichnet, dass** das Katalysatorelement (11) einen runden Querschnitt und/oder das Mischelement (9) einen unrunden, insbesondere ovalen, Querschnitt aufweist.

6. Abgasnachbehandlungseinrichtung nach einem der vorhergehenden Ansprüche, **dadurch gekennzeichnet, dass** das Katalysatorelement (11) ein SCR-Katalysatorelement ist.

7. Abgasnachbehandlungseinrichtung nach einem der vorhergehenden Ansprüche, **dadurch gekennzeichnet, dass** die Reduktionsmitteleinbringvorrichtung (3) auf das Katalysatorelement (11) ausgerichtet ist.

8. Abgasnachbehandlungseinrichtung nach einem der vorhergehenden Ansprüche, **dadurch gekennzeichnet, dass** ein Sprühkegel (7) der Reduktionsmitteleinbringvorrichtung (3) bei wenigstens einem Abgasmassenstrom von dem Katalysatorelement (11) eingefasst ist.

## Claims

1. Exhaust aftertreatment device (1) for the aftertreatment of exhaust gas of an internal combustion engine, comprising an SCR catalyst (2) for selective catalytic reduction, a reduction agent insertion device (3) for adding reductant at an entry point (4) upstream of the SCR catalyst and a mixing apparatus (8) arranged in flow direction between the entry point (4) and the SCR catalyst (2), **characterised in that** the mixing apparatus (8) comprises a mixing element (9) and a catalyst element (11), wherein the catalyst element (11) has in the flow direction of exhaust gas a cross-sectional area which is smaller than the cross-sectional area of the mixing element (9), and **in that** the catalyst element (11) is secured directly onto the mixing element (9), wherein mixing vanes (10) of the mixing element (9) are secured on their inner side in radial direction directly onto the catalyst element (11) or a mount (17) is formed for the catalyst element (11) on the radially inner side of the mixing vanes (10) in which mount the catalyst element (11) is arranged and secured.

2. Exhaust aftertreatment device according to claim 1, **characterised in that** the catalyst element (11) is arranged upstream or downstream of the mixing element (9).

3. Exhaust aftertreatment device according to any of the preceding claims, **characterised in that** the mixing element (9) has at least one region which embraces the catalyst element (11) and/or extends beyond the catalyst element (11) with respect to a radial direction.

4. Exhaust aftertreatment device according to any of the preceding claims, **characterised in that** the mount (17) is a central mount (17).

5. Exhaust aftertreatment device according to any of the preceding claims, **characterised in that** the catalyst element (11) has a round cross section and/or the mixing element (9) has a non-round cross-section, in particular an oval cross-section.

6. Exhaust aftertreatment device according to any of the preceding claims, **characterised in that** the catalyst element (11) is an SCR catalyst element.

7. Exhaust aftertreatment device according to any of the preceding claims, **characterised in that** the reduction agent insertion device (3) is oriented to point towards the catalyst element (11).

8. Exhaust aftertreatment device according to any of the preceding claims, **characterised in that** the reduction agent insertion device (3) has a spray cone (7) which is enclosed by the catalyst element (11) in the presence of at least one exhaust mass flow.

## Revendications

1. Dispositif de post-traitement de gaz d'échappement (1) destiné au post-traitement de gaz d'échappement d'un moteur à combustion interne, avec un catalyseur SCR (2) destiné à la réduction catalytique sélective, avec un dispositif d'ajout d'agent de réduction (3) destiné à ajouter un agent de réduction au niveau d'un point d'ajout (4) situé en amont du catalyseur SCR ainsi qu'avec un dispositif de mélange (8) agencé dans le flux entre le point d'ajout (4) et le catalyseur SCR (2), **caractérisé en ce que** le dispositif de mélange (8) comporte un élément mélangeur (9) ainsi qu'un élément catalyseur (11), lequel élément catalyseur (11) présente, vu dans le sens d'écoulement du gaz d'échappement, une plus petite surface de section transversale que l'élément mélangeur (9), et **en ce que** l'élément catalyseur (11) est fixé directement à l'élément mélangeur (9), des ailettes de mélange (10) de l'élément mélangeur (9) étant fixées par leur côté radialement intérieur directement à l'élément catalyseur (11) ou un logement (17) qui est destiné à l'élément catalyseur (11) et dans lequel l'élément catalyseur (11) est agencé et fixé étant conçu sur le côté radialement intérieur des ailettes de mélange (10).

2. Dispositif de post-traitement de gaz d'échappement selon la revendication 1, **caractérisé en ce que** l'élément catalyseur (11) est agencé en amont ou en aval de l'élément mélangeur (9).

3. Dispositif de post-traitement de gaz d'échappement selon l'une des revendications précédentes, **caractérisé en ce que** l'élément mélangeur (9) entoure au moins partiellement l'élément catalyseur (11) et/ou dépasse radialement de l'élément catalyseur (11) par rapport au sens d'écoulement.

4. Dispositif de post-traitement de gaz d'échappement selon l'une des revendications précédentes, **caractérisé en ce que** le logement (17) se présente comme un logement central (17).

5. Dispositif de post-traitement de gaz d'échappement selon l'une des revendications précédentes, **caractérisé en ce que** l'élément catalyseur (11) a une section transversale ronde et/ou l'élément mélangeur (9) a une section transversale non ronde, en particulier ovale.

6. Dispositif de post-traitement de gaz d'échappement selon l'une des revendications précédentes, **caractérisé en ce que** l'élément catalyseur (11) est un élément catalyseur SCR.

7. Dispositif de post-traitement de gaz d'échappement selon l'une des revendications précédentes, **caractérisé en ce que** le dispositif d'ajout d'agent de réduction (3) est orienté sur l'élément catalyseur (11).

8. Dispositif de post-traitement de gaz d'échappement selon l'une des revendications précédentes, **caractérisé en ce qu'**un cône de projection (7) du dispositif d'ajout d'agent de réduction (3) est entouré, pour au moins un flux massique de gaz d'échappement, par l'élément catalyseur (11).
